# EUROPEAN PATENT APPLICATION

(11) **EP 4 807 556 A1**
(43) Date of publication of application: **16.09.2026**
(21) Application number: 26160037.3
(22) Date of filing: 23.02.2026
(51) Int. Cl.: G06F 9/54

(54) **HUB DEVICE, OPERATING METHOD OF HUB DEVICE, AND CLUSTER SYSTEM INCLUDING HUB DEVICE**

(30) Priority: 21.02.2025 KR 20250022862
(71) Applicant: SK hynix Inc., Bubal-eub Icheon-si Gyeonggi-do 17336 (KR)
(72) Inventor: RHO, Jun Rye, 17336 Icheon-si, Gyeonggi-do (KR); PARK, Jae Yong, 17336 Icheon-si, Gyeonggi-do (KR); JUNG, In Ho, 17336 Icheon-si, Gyeonggi-do (KR)
(74) Representative: Isarpatent

(57) **Abstract**

A hub device is provided. The hub device includes a first memory, a second memory, and a hub controller. The first memory is configured to store queue setting information for setting a plurality of software queues corresponding to a plurality of processors, and to store doorbell information generated based on the queue setting information and indicating statuses of the plurality of software queues. The second memory is configured to store tag information triggering operations of the plurality of processors. The hub controller is configured to select a target processor from the plurality of processors upon request of a host, select a target queue from at least one software queue corresponding to the target processor, and support communication between the host and the target processor using the target queue.

## Description

### BACKGROUND

### 1. Technical Field

Various embodiments relate generally to an electronic device, and more particularly to a hub device, a method of operating the hub device, and a cluster system including the hub device.

### 2. Related Art

A hub device that supports communication between software queues and processors can manage the efficient exchange of data between a plurality of processors and memories. The hub device can create and update queues, or maintain status information based on requests from the processors to optimize data flow. The hub device can utilize a doorbell memory to keep track of requests from each processor or status changes thereof, so that the hub device can set up software queues and update tag information. As a result, the hub device can increase reliability and performance in multi-processor environments, and is used generally in environments that require large-scale data processing and parallel computing.

### SUMMARY

Embodiments of the present disclosure provide a cluster system supporting communication between a host and a plurality of processors by utilizing a hub device.

According to an embodiment, a hub device may include a first memory configured to store queue setting information for setting a plurality of software queues corresponding to a plurality of processors, and store doorbell information generated based on the queue setting information and indicating statuses of the plurality of software queues, a second memory configured to store tag information triggering operations of the plurality of processors, and a hub controller configured to select a target processor from the plurality of processors upon a request of a host, select a target queue from at least one software queue corresponding to the target processor, and support communication between the host and the target processor using the target queue.

According to an embodiment, an operating method of a hub device including a first memory and a second memory may include updating doorbell information indicating statuses of a plurality of software queues corresponding to a plurality of processors stored in the first memory in response to a request from a host or the plurality of processors, updating tag information triggering operations of the plurality of processors stored in the second memory based on the doorbell information, selecting a target processor among the plurality of processors based on the tag information, selecting a target queue from at least one software queue corresponding to the target processor, and providing the target processor with doorbell information corresponding to the target queue.

According to another embodiment, a cluster system may include a plurality of processors configured to communicate with a host, and a hub device configured to store doorbell information indicating statuses of a plurality of software queues corresponding to the plurality of processors, store tag information triggering operations of the plurality of processors, select a target processor from the plurality of processors in response to a request from the host, select a target queue from at least one software queue corresponding to the target processor, and support communication between the host and the target processor using the target queue.

These and other features and advantages of the embodiments of the present disclosure will become apparent to those skilled in the art from the following detailed description in conjunction with the following drawings.

### BRIEF DESCRIPTION OF THE DRAWINGS

FIG. 1 is a diagram illustrating communication between a host and a processor according to an embodiment of the present disclosure;
FIG. 2 is a diagram illustrating a cluster system according to an embodiment of the present disclosure;
FIG. 3 is a diagram illustrating a cluster system according to an embodiment of the present disclosure;
FIG. 4 is a diagram illustrating the configuration and operation of a hub device of FIG. 3 according to an embodiment of the present disclosure;
FIG. 5A is a diagram illustrating information about setting and operations of queues according to an embodiment of the present disclosure;
FIG. 5B is a diagram illustrating a plurality of processors and queue setting information and doorbell information corresponding to software queues of each processor according to an embodiment of the present disclosure;
FIG. 6 is a diagram illustrating operations of a software queue according to an embodiment of the present disclosure;
FIG. 7 is a flowchart illustrating operations of a hub device according to an embodiment of the present disclosure;
FIG. 8 is a flowchart illustrating operations of a hub device according to an embodiment of the present disclosure;
FIG. 9 is a flowchart illustrating operations of a hub device according to an embodiment of the present disclosure;
FIG. 10 is a flowchart illustrating operations of a hub device according to an embodiment of the present disclosure;
FIG. 11 is a flowchart illustrating operations of a hub device according to an embodiment of the present disclosure;
FIG. 12 is a flowchart illustrating operations of a hub device according to an embodiment of the present disclosure;
FIG. 13 is a flow diagram illustrating communication process using a submission queue according to an embodiment of the present disclosure; and
FIG. 14 is a flow diagram illustrating communication process using a complete queue according to an embodiment of the present disclosure.

### DETAILED DESCRIPTION

Embodiments of the present disclosure are described in detail with reference to the accompanying drawings. Specific structural or functional descriptions of examples of embodiments in accordance with concepts which are disclosed in this specification are illustrated only to describe the examples of embodiments in accordance with the concepts and the examples of embodiments in accordance with the concepts may be carried out by various forms but the descriptions are not limited to the examples of embodiments described in this specification.

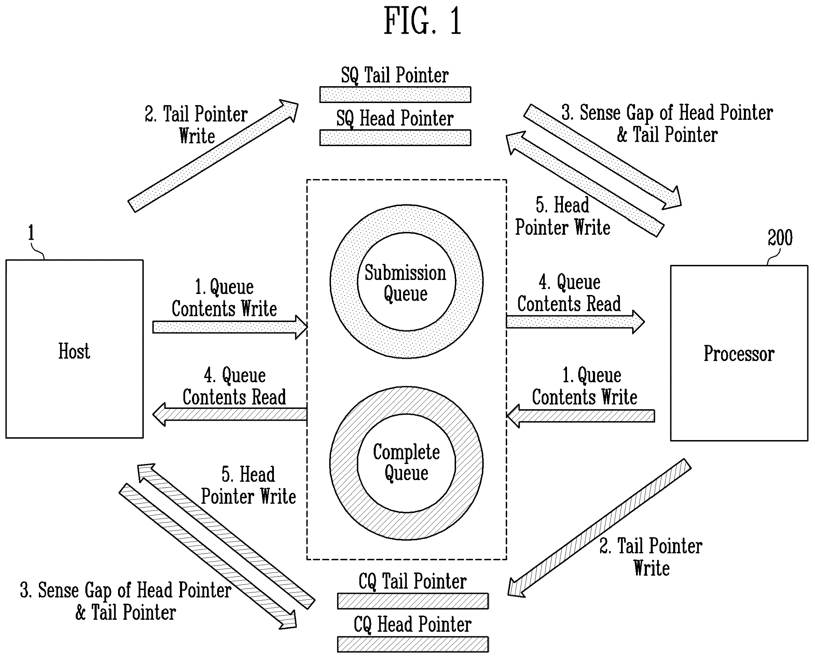

FIG. 1 is a diagram illustrating communication between a host 1 and a processor 200 in accordance with an embodiment of the present disclosure.

Referring to FIG. 1, the host 1 and the processor 200 may communicate with each other using a submission queue SQ and a complete queue CQ. The host 1 may include a central processing unit (CPU). The processor 200 is a hardware device which processes jobs and may include a hardware accelerator or a tiny processing unit (TPU).

A CPU is a general-purpose processor which handles a variety of tasks (arithmetic operations, logical operations, control, etc.) and may serve as the core computing unit of a computer. A TPU is a small, low-power processor optimized for specific tasks (e.g., sensor data processing, simple operations, etc.) and are generally found in Internet of Things (IoT) and edge devices. CPUs may perform general-purpose, high-performance computations, while TPUs may efficiently handle specific functions in a low-power environment.

The submission queue SQ may be used to submit jobs or commands in a multiprocessor system. The operation of the submission queue SQ may include job submission, job queuing, job processing, synchronization processing, result delivery, etc.

The job submission may be an operation of inputting a job into the submission queue SQ for the processor 200 to perform. The processor 200 may include a hardware accelerator. The job may include a command, a data processing request, or another computational operation. The job queuing may be an operation in which the job submitted to the submission queue SQ is held in the submission queue SQ until the job is processed by the processor 200. The submission queue SQ may be designed such that multiple jobs may be processed sequentially. The job processing may be an operation in which the processor 200 takes jobs one by one from the submission queue SQ and processes the jobs. As the jobs are processed, the processor 200 may input the results of the processing into another queue, such as the complete queue CQ. The synchronization and management may be a mechanism to verify whether the submission queue SQ is empty and whether the job is completed, and may be an operation of synchronization and status management between the processors 200. The result delivery may be an operation of returning results when the processor 200 processes the job, and tracking the completion status of the corresponding job to cause subsequent jobs to be executed.

The complete queue CQ may be used to deliver the results of command processing between the processors 200 to the host 1 and to manage a status. The complete queue CQ may work in pairs with the submission queue SQ and may be utilized primarily on high-performance interfaces (e.g., non-volatile memory express (NVMe) and remote direct memory access (RDMA)).

The operation of the complete queue CQ may include command processing completion, result logging, host notification, host queue checking, queue updates, etc.

The command processing completion may be an operation in which the processor 200 reads and processes a job (a command) from the submission queue SQ and generates job completion information. The job completion information may include a command identifier (ID), a status code (success/failure), the amount of data processed, etc.

The result logging may be an operation in which the processor 200 writes the results of the command processing to the complete queue CQ. The complete queue CQ may be located in a memory area and mapped to a job (or a command) in the submission queue SQ based on the command ID.

The host notification may be an operation in which the processor 200 notifies the host 1 of the completion of the job through the doorbell memory after the completion of the job. In some cases, the processor 200 may use an interrupt to quickly notify the host 1 of the completion of the job.

The host queue checking may be an operation in which the host 1 checks the complete queue CQ in response to the doorbell memory or the interrupt. The processor 200 may read the results recorded in the complete queue CQ, check the status of the corresponding command, and perform subsequent jobs.

Queue index updates may be an operation in which the host 1 updates the index of the complete queue CQ to synchronize with the processor 200 when a job is processed by the processor 200. The index of the complete queue CQ may include a head pointer and a tail pointer.

In FIG. 1, the host 1 and the processor 200 may communicate with each other by using the submission queue SQ. For example, through a series of processes using the submission queue SQ, the host 1 may provide commands to the processor 200.

The host 1 may write queue contents to a queue memory. The queue contents may include values for executing a command by reading a queue. The queue may operate as the submission queue SQ or the complete queue CQ according to a setting. In a communication using the submission queue SQ, the queue contents may include a command ID, an operation code, a data address, a data size, and the like. The queue memory may be memory accessible to the host 1 and the processor 200. The queue memory may be placed at various locations. For example, the queue memory may be located inside the host 1. The queue memory may be located inside the processor 200. The queue memory may be external to the host 1 and the processor 200. After the host 1 writes the queue contents to the queue memory (1. Queue Contents Write), the host 1 may request a write to the tail pointer of the submission queue SQ (2. Tail Pointer Write). The tail pointer requested for writing may be updated. The processor 200 may sense a gap between the head pointer (for example, SQ head pointer) and the tail pointer (for example, SQ tail pointer) of the submission queue SQ (3. Sense Gap of Head Pointer & Tail Pointer). The processor 200 may read the queue contents stored in the queue memory when the gap changes (4. Queue Contents Read). The processor 200 may receive a command from the read queue contents. After reading the queue contents, the processor 200 may request a write to the head pointer of the submission queue SQ (5. Head Pointer Write). The head pointer requested for writing may be updated.

In FIG. 1, the host 1 and the processor 200 may communicate using the complete queue CQ. For example, through a series of processes utilizing the complete queue, the processor 200 may provide the host 1 with the results of command processing.

The processor 200 may write the queue contents to the queue memory. In communication utilizing the complete queue CQ, the queue contents may include a command ID, command processing results, and the like.

After the processor 200 writes the queue contents to the queue memory, the processor 200 may request a write to the tail pointer of the complete queue CQ (1. Queue Contents Write). The tail pointer requested for writing may be updated. The host 1 may sense a gap between the head pointer (for example, CQ head pointer) and the tail pointer (for example, CQ tail pointer) of the complete queue CQ (3. Sense Gap of Head Pointer & Tail Pointer). The host 1 may read the queue contents stored in the queue memory when the gap changes. The host 1 may receive a command processing result from the read queue contents (4. Queue Contents Read). After reading the queue contents, the host 1 may request a write to the head pointer of the complete queue CQ (5. Head Pointer Write). The head pointer for writing may be updated.

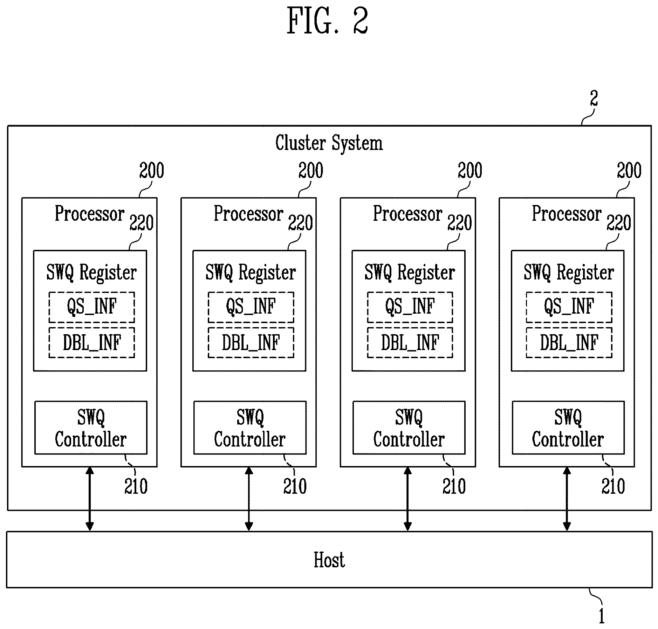

FIG. 2 is a diagram illustrating a cluster system 2 according to an embodiment of the present disclosure. Hereinafter, content overlapping with previously described content may be omitted.

Referring to FIG. 2, the cluster system 2 may include a plurality of processors 200. Each processor 200 may include a software queue (SWQ) controller 210 and a software queue (SWQ) register 220 for communication with the host 1.

The software queue controller 210 may support communication between the processor 200 and the host 1 using a software queue. For example, the software queue controller 210 may enable the processor 200 to receive commands from the host 1 via the software queue. The software queue controller 210 may support the host 1 to receive command processing results from the processor 200 via the software queue.

The software queue register 220 may store information about a software queue corresponding to the processor 200. The information about the software queue may include queue setting information QS_INF for setting up the software queue and doorbell information DBL_INF indicating the status of the software queue. The software queue may operate as a submission queue or a complete queue depending on the queue setting information QS_INF.

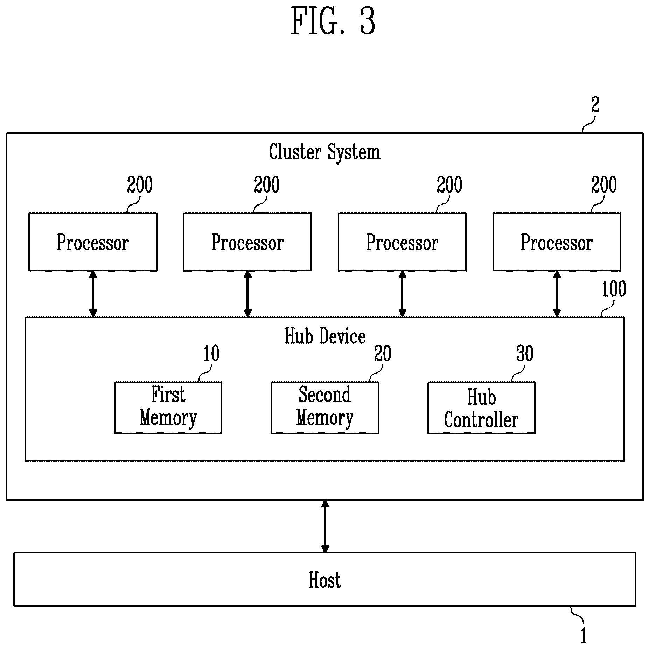

FIG. 3 is a diagram illustrating the cluster system 2 according to an embodiment of the present disclosure. Hereinafter, content overlapping with previously described content may be omitted.

Referring to FIG. 3, the cluster system 2 may include a hub device 100 and the plurality of processors 200. The hub device 100 may support communication between the plurality of processors 200 and the host 1.

The hub device 100 may include a first memory 10, a second memory 20, and a hub controller 30.

The first memory 10 may store information regarding settings and statuses of a plurality of software queues corresponding to the plurality of processors 200. The second memory 20 may store information which triggers operations of the plurality of processors 200. The hub controller 30 may control the first memory 10 and the second memory 20 to support communication between the plurality of processors 200 and the host 1.

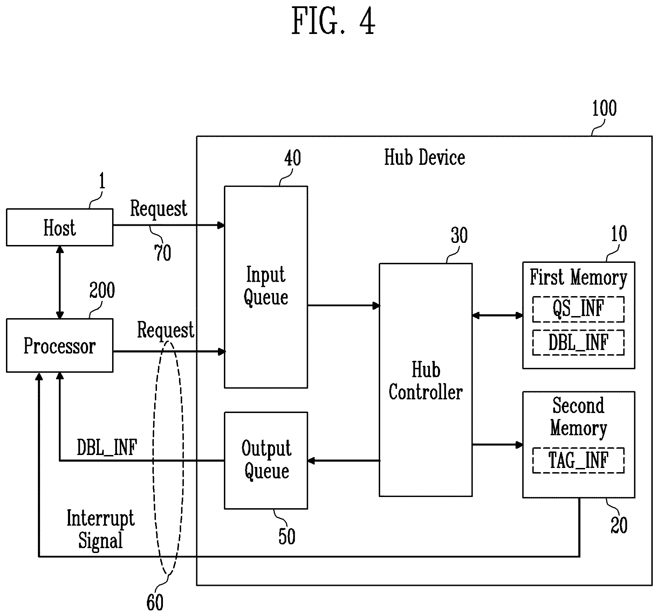

In the embodiment described with reference to FIG. 3, each processor may not include a separate configuration for controlling a software queue for communication with the host 1. As the hub device 100 collectively manages and supports communication between the plurality of processors 200 and the host 1, resources for managing a software queue corresponding to each processor may be conserved. A more detailed description of the hub device 100 will be described below with reference to FIG. 4.

FIG. 4 is a diagram illustrating the configuration and operation of the hub device 100 of FIG. 3 according to an embodiment of the present disclosure.

Referring to FIG. 4, one processor 200 among the plurality of processors described with reference to FIG. 3 is shown. Hereinafter, content overlapping with previously described content may be omitted.

The hub device 100 may support communication between the host 1 and the processor 200. The hub device 100 may communicate with the host 1 via a first interface 70 (for example, receiving a request from the host 1). The hub device 100 may communicate with the processor 200 via a second interface 60. In embodiments, the first interface 70 may include an Advanced eXtensible Interface (AXI). The second interface 60 may include a direct interface.

In an embodiment, the hub device 100 may include the first memory 10, the second memory 20, the hub controller 30, an input queue 40, and an output queue 50.

The first memory 10 may store the queue setting information QS_INF and the doorbell information DBL_INF. The queue setting information QS_INF may be information for setting a corresponding software queue in the processor 200. The doorbell information DBL_INF may indicate the status of the software queue. The software queue may be set as a complete queue or a submission queue according to the queue setting information QS_INF.

The second memory 20 may store tag information TAG_INF. The tag information TAG_INF may be for triggering operations of the processor 200. The tag information TAG_INF may include information about the target processor requested by the host 1. The second memory 20 may provide an interrupt signal to the processor 200 indicating whether the target queue is empty based on the tag information TAG_INF.

The hub controller 30 may control the first memory 10 and the second memory 20 to support communication between the processor 200 and the host 1. For example, the hub controller 30 may select a target processor from the plurality of processors in response to a request from the host 1. The hub controller 30 may select a target queue from one or more software queues corresponding to the target processor in response to the request from the host 1.

In response to a setup request from the host 1, the hub controller 30 may write the queue setting information QS_INF received from the host 1 through the input queue 40 to the first memory 10. The hub controller 30 may generate the doorbell information DBL_INF based on the queue setting information QS_INF, and may write the generated doorbell information DBL_INF to the first memory 10.

The hub controller 30 may read or update the doorbell information DBL_INF in response to a request from the host 1 or the processor 200. The hub controller 30 may update the tag information TAG_INF after updating the doorbell information DBL_INF.

In one embodiment, the hub controller 30 may receive a tail pointer write request of a software queue from the host 1 or the processor 200 through the input queue 40. In response to the tail pointer write request, the hub controller 30 may update the tail pointer of the software queue and may update the tag information TAG_INF to indicate that the target queue is not empty. Specifically, the hub controller 30 may read the doorbell information DBL_INF from the first memory 10 in response to the tail pointer write request. The hub controller 30 may modify the tail pointer of the software queue from the read doorbell information DBL_INF. The hub controller 30 may write the modified doorbell information DBL_INF back to the first memory 10. The hub controller 30 may then write tag information TAG_INF to the second memory 20 indicating that the software queue is not empty.

In one embodiment, the hub controller 30 may receive a head pointer write request of a software queue from the host 1 or the processor 200 through the input queue 40. In response to the head pointer write request, the hub controller 30 may update the head pointer of the software queue and update the tag information TAG_INF to indicate that the target queue is empty. Specifically, the hub controller 30 may read the doorbell information DBL_INF from the first memory 10 in response to the head pointer write request. The hub controller 30 may modify the head pointer in the software queue from the read doorbell information DBL_INF. The hub controller 30 may write the modified doorbell information DBL_INF back to the first memory 10. The hub controller 30 may then write tag information TAG_INF indicating that the software queue is empty to the second memory 20.

The input queue 40 may receive a request from the host 1 or the processor 200. The input queue 40 may provide the received request to the hub controller 30. The request may include at least one of a setup request, a head pointer write request of a software queue, a tail pointer write request of the software queue, and a read request for the doorbell information DBL_INF.

The output queue 50 may output the doorbell information DBL_INF received from the first memory 10 through the hub controller 30 to the processor 200.

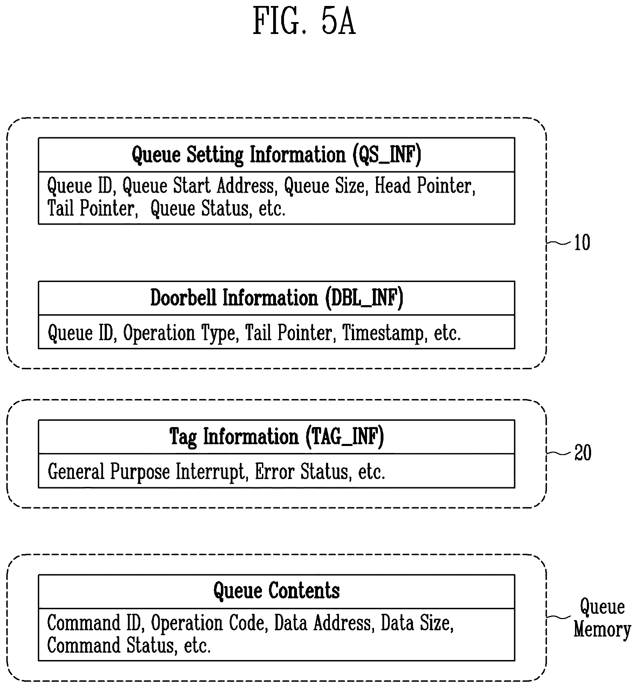

FIG. 5A is a diagram illustrating information about queue setting and operation according to an embodiment of the present disclosure. Hereinafter, content overlapping with previously described content may be omitted.

Referring to FIG. 5A, information about a software queue may include the queue setting information QS_INF, the doorbell information DBL_INF, the tag information TAG_INF, and queue contents.

In FIG. 5A, the queue setting information QS_INF and the doorbell information DBL_INF may be stored in the first memory 10 as described with reference to FIG. 4. The tag information TAG_INF may be stored in the second memory 20 as described with reference to FIG. 4. The queue contents may be stored in the queue memory (not shown) as described with reference to FIG. 1.

The queue setting information QS_INF may store metadata for managing the status and configuration of a queue, and may be represented in the form of a structure in memory.

In FIG. 5A, the queue setting information QS_INF may include Queue ID, Queue Start Address, Queue Size, Head Pointer, Tail Pointer, Queue Status, etc. The Queue ID may be a unique value which identifies the queue. Queue Start Address may be a memory start address where the queue data will be stored. Queue Size may indicate the maximum number of entries which the queue may handle. Head Pointer and Tail Pointer may track the read and write locations of the queue. Queue Status may indicate the current status (active/inactive, full/empty) of the queue.

The doorbell information DBL_INF may be used as a signal to indicate a change in the status of the queue (command submitted/job completed, etc.) and may be stored generally in a hardware register.

The doorbell information DBL_INF may include Queue ID, Operation Type, Tail Pointer, Timestamp, etc. The Queue ID may be a value to identify which queue the doorbell corresponds to. Operation Type may indicate the type of job to be performed (e.g., command submission or completion notification). Tail Pointer may indicate where the command is added. Timestamp may indicate when an event occurred.

The tag information TAG_INF may be for triggering an operation by the processor.

The tag information TAG_INF may include General Purpose Interrupt and Error Status, etc. General Purpose Interrupt may be an interrupt signal provided to the processor. Error Status may indicate whether the queue is in error.

The queue contents may be information about a command to be performed by the processor. The queue contents may include Command ID, Operation Code, Data Address, Data Size, Command Status, etc.

Command ID may be a unique value which identifies a command requested by the host. Operation Code may indicate the type of a job to be processed in response to the command. Data Address may indicate an address of data to be processed by the command. Data Size may represent the size of the data to be processed by the command. Command Status may indicate a processing result of the command.

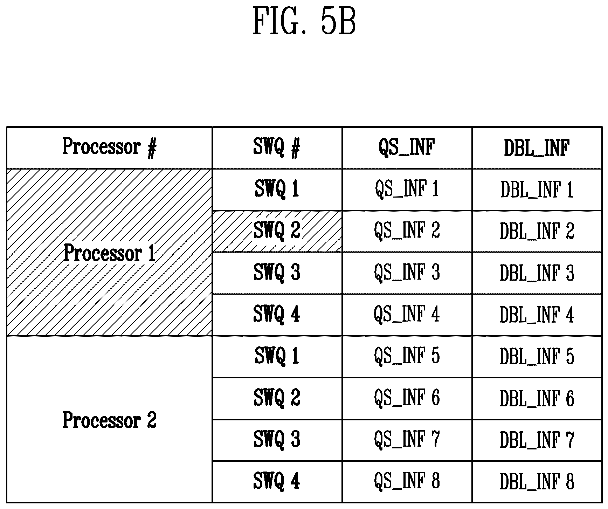

FIG. 5B is a diagram illustrating a plurality of processors and queue setting information QS_INF and doorbell information DBL_INF corresponding to software queues on each processor according to an embodiment of the present disclosure. Hereinafter, content overlapping with previously described content may be omitted.

Referring to FIG. 5B, the host may communicate with first and second processors (processor 1 and processor 2). Each of the first processor 1 and the second processor 2 may correspond to at least one software queue.

The first memory as described with reference to FIG. 3 may store the queue setting information QS_INF relating to settings of a plurality of software queues corresponding to the plurality of processors. The first memory may store the doorbell information DBL_INF indicative of the current status of the plurality of software queues. For example, each of the first processor 1 and the second processor 2 may correspond to first to fourth software queues SWQ1 to SWQ4. The first memory may store queue setting information QS_INF 1 to QS_INF 4 and doorbell information DBL_INF 1 to DBL_INF 4 of the first to fourth software queues SWQ1 to SWQ4 corresponding to the first processor. The first memory may store queue setting information QS_INF 5 to QS_INF 8 and doorbell information DBL_INF 5 to DBL_INF 8 of the first to fourth software queues SWQ1 to SWQ4 corresponding to the second processor.

In FIG. 5B, the first processor 1 may be selected as the target processor to communicate with the host among the first and second processors (1 and 2). The second software queue SWQ 2 of the first to fourth software queues SWQ 1 to SWQ 4 corresponding to the first processor 1 may be selected as the target queue. Doorbell information DBL_INF2 corresponding to the target queue may be used when the host and the target processor communicate.

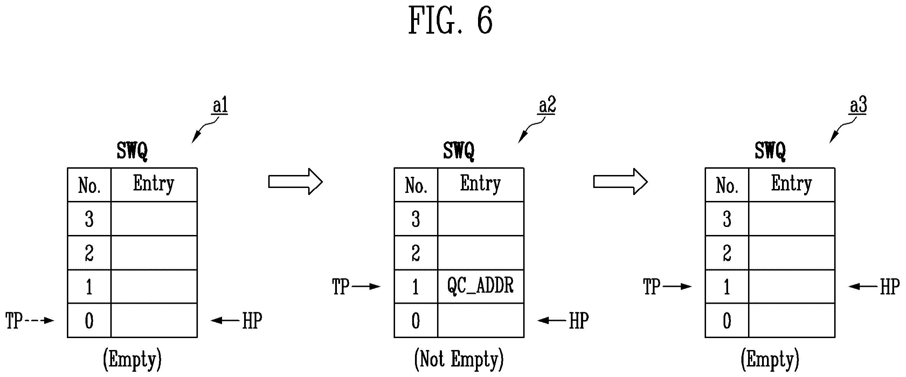

FIG. 6 is a diagram illustrating operations of a software queue according to an embodiment of the present disclosure. Hereinafter, content overlapping with previously described content may be omitted.

Referring to FIG. 6, an entry size of a software queue SWQ is 4, and indices of entries may represent 0 to 3.

At a1, the software queue SWQ may be in an initialized state. A head pointer HP may point to zero (0) and a tail pointer TP may point to zero (0). The status of the software queue SWQ may indicate Empty.

At a2, a command may be input from the host may be input and an address QC_ADDR of the queue contents may be stored in Entry 1 of the software queue. The head pointer HP may point to zero (0) and the tail pointer TP may point to one (1). When the address QC_ADDR of the queue contents is read, the queue contents containing information about the command may be acquired. Since the gap between the head pointer HP and the tail pointer TP has changed from 0 to 1, the status of the software queue SWQ may indicate Not Empty.

At a3, the address QC_ADDR of the queue contents stored in Entry 1 of the software queue may be read complete, and Entry 1 may be in the release state. The head pointer HP may point to 1 and the tail pointer TP may point to 1. Since the gap between the head pointer HP and the tail pointer TP has changed from 1 to 0, the status of the software queue SWQ may indicate Empty.

As described above at a1 to a3, the gap between the head pointer HP and the tail pointer TP may identify whether the status of the software queue SWQ is empty or not.

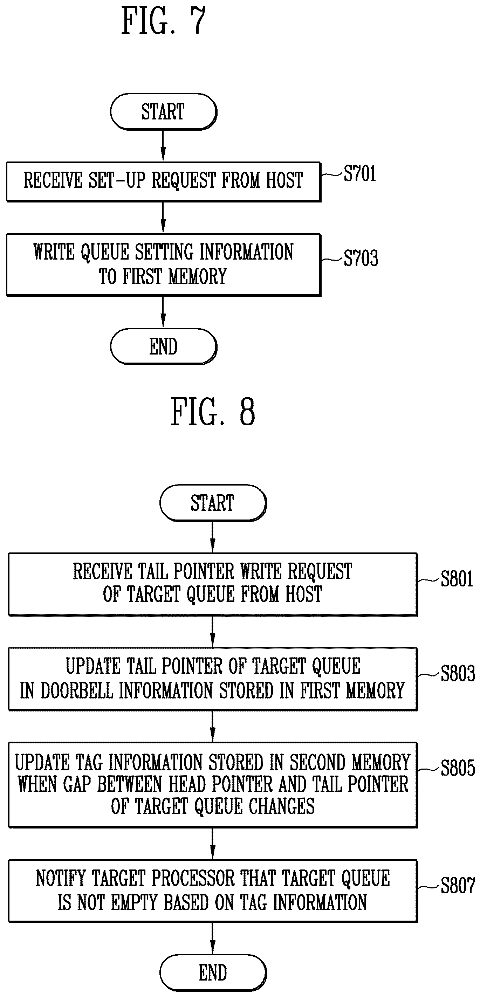

FIG. 7 is a flowchart illustrating operations of a hub device according to an embodiment of the present disclosure.

Referring to FIG. 7, S701 and S703 may show processes by which a software queue is set up.

In S701, the hub device may receive a setup request from a host. The setup request may be an initial request to set up a software queue.

In S703, the hub device may write queue setting information received from the host to a first memory.

FIG. 8 is a flowchart illustrating operations of a hub device according to an embodiment of the present disclosure.

Referring to FIG. 8, S801 to S807 may show processes for notifying a target processor, by the hub device (for example, hub device 100), of a command issuance from a host. In FIG. 8, a target queue may operate as a submission queue.

In S801, the hub device may receive a tail pointer write request of the target queue from the host (for example, host 1).

In S803, the hub device may update the tail pointer of the target queue from doorbell information stored in a first memory.

In S805, the hub device may update the tag information stored in a second memory when the gap between a head pointer and the tail pointer of the target queue changes.

In S807, the hub device may notify the target processor that the target queue is not empty based on the tag information.

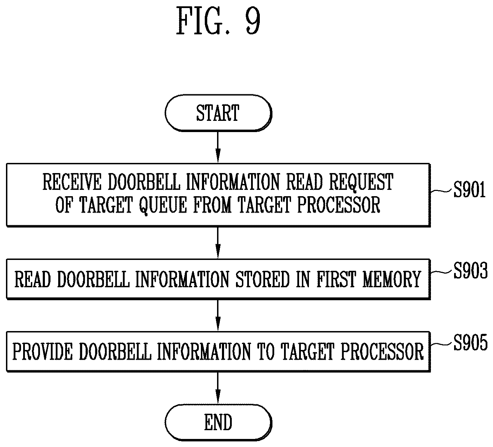

FIG. 9 is a flowchart illustrating operations of a hub device according to an embodiment of the present disclosure.

Referring to FIG. 9, S901 to S905 may show processes for providing doorbell information to a target processor by the hub device (for example, hub device 100).

In S901, the hub device may receive a doorbell information read request of a target queue from the target processor.

In S903, the hub device may read doorbell information stored in a first memory.

In S905, the hub device may provide the read doorbell information to the target processor.

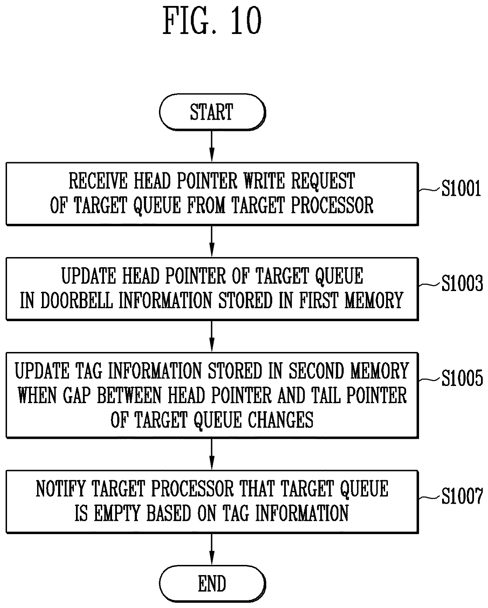

FIG. 10 is a flowchart illustrating operations of a hub device according to an embodiment of the present disclosure.

Referring to FIG. 10, S1001 to S1007 may show processes for notifying a host (for example, host 1), by the hub device (for example, hub device 100), of receipt of a command from a target processor. In FIG. 10, a target queue may operate as a submission queue.

In S1001, the hub device may receive a head pointer write request of the target queue from the target processor.

In S1003, the hub device may update the head pointer of the target queue from doorbell information stored in a first memory.

In S1005, the hub device may update tag information stored in a second memory when the gap between the head pointer and a tail pointer of the target queue changes.

In S1007, the hub device may notify the target processor that the target queue is empty based on the tag information.

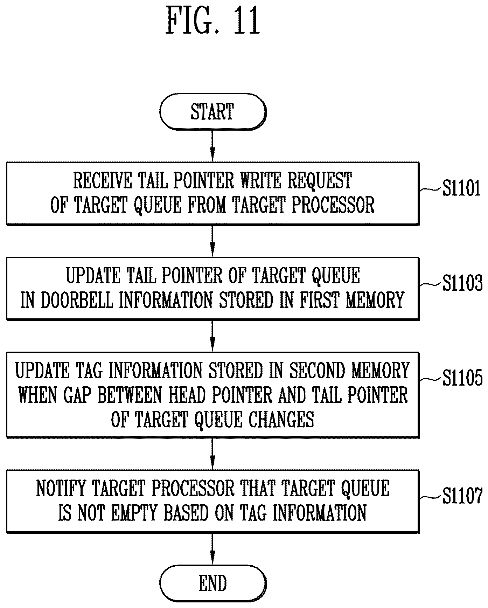

FIG. 11 is a flowchart illustrating operations of a hub device according to an embodiment of the present disclosure.

Referring to FIG. 11, S1101 to S1107 may show processes for notifying a host (for example, host 1), via a hub device (for example, hub device 100), for which a target processor has completed processing a command. In FIG. 11, the target queue may operate as a complete queue.

In S1101, the hub device may receive a tail pointer write request of the target queue from the target processor.

In S1103, the hub device may update the tail pointer of the target queue from doorbell information stored in a first memory.

In S1105, the hub device may update tag information stored in a second memory when the gap between a head pointer and the tail pointer of the target queue changes.

In S1107, the hub device may notify the target processor that the target queue is not empty based on the tag information. The hub device may then notify the host that the head pointer of the target queue is updated.

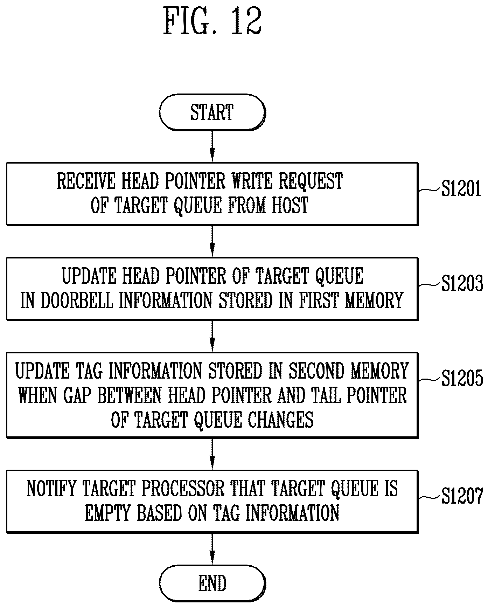

FIG. 12 is a flowchart illustrating operations of a hub device according to an embodiment of the present disclosure.

Referring to FIG. 12, S1201 to S1207 may show processes by which a host (for example, host 1), by the hub device (for example, hub device 100), receives completion of command processing from a target processor. In FIG. 12, a target queue may operate as a complete queue.

In S1201, the hub device may receive a head pointer write request of the target queue from the host.

In S1203, the hub device may update the head pointer of the target queue from doorbell information stored in a first memory.

In S1205, the hub device may update tag information stored in a second memory when the gap between the head pointer and a tail pointer of the target queue changes.

In S1207, the hub device may notify the target processor that the target queue is empty based on the tag information.

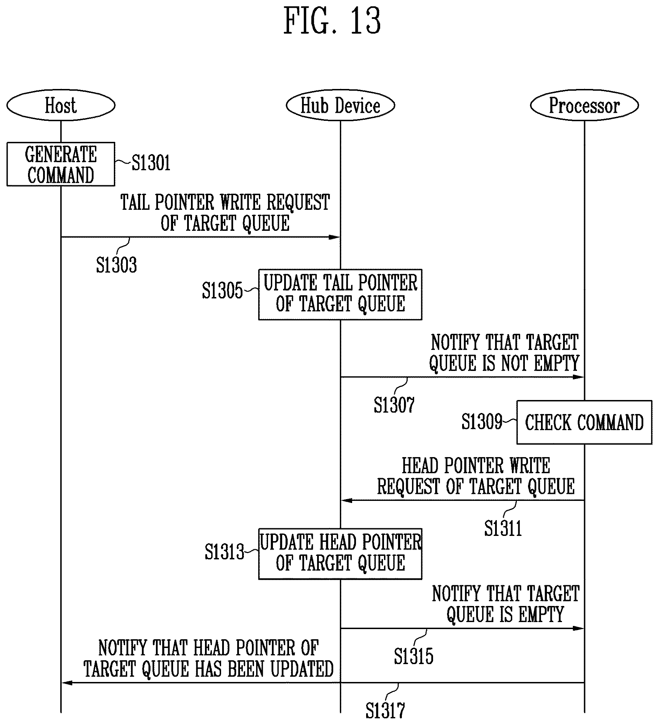

FIG. 13 is a flow diagram illustrating communication process using a submission queue according to an embodiment of the present disclosure.

Referring to FIG. 13, a target queue may be set up and operate as the submission queue.

In S1301, a host may generate a command and write queue contents containing information about the command to a queue memory.

In S1303, the host may provide a hub device with a tail pointer write request of the target queue.

In S1305, the hub device may update the tail pointer of the target queue.

In S1307, the hub device may notify a processor that the target queue is not empty.

In S1309, the processor may verify (check) the command by reading the queue contents written to the queue memory (i.e., check command).

In S1311, the processor may provide the hub device with a head pointer write request of the target queue when checking the command check is complete.

In S1313, the hub device may update the head pointer of the target queue.

In S1315, the hub device may notify the processor that the target queue is empty.

In S1317, the processor may notify the host that the head pointer of the target queue has been updated.

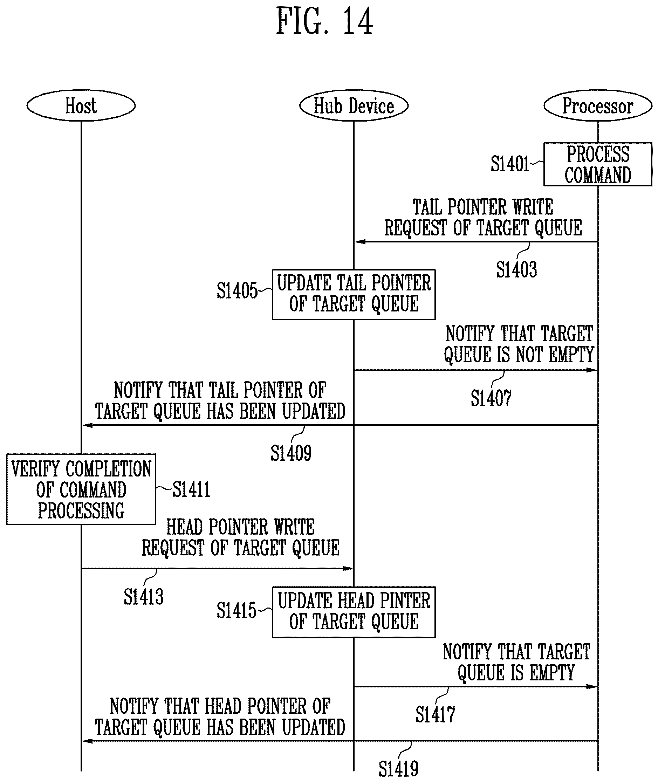

FIG. 14 is a flowchart illustrating communication using a complete queue according to one embodiment.

Referring to FIG. 14, a target queue may be set up and operate as the complete queue according to an embodiment of the present disclosure.

In S1401, a processor may process a command and write queue contents to a queue memory which includes a processing result of the command.

In S1403, the processor may provide a hub device with a tail pointer write request of the target queue.

In S1405, the hub device may update the tail pointer of the target queue.

In S1407, the hub device may notify the processor that the target queue is not empty.

In S1409, the processor may notify a host that the tail pointer of the target queue has been updated.

In S1411, the host may verify that the processor has completed processing the command (i.e., verify completion of command processing).

In S1413, the host may provide the hub device with a head pointer write request of the target queue.

In S1415, the hub device may update the head pointer of the target queue.

In S1417, the hub device may notify the processor that the target queue is empty.

In S1419, the processor may notify the host that the head pointer of the target queue has been updated.

According to the present disclosure, a cluster system supporting communication between a host and a plurality of processors by utilizing a hub device is provided.

Although the foregoing embodiments have been illustrated and described in some detail for purposes of clarity and understanding, the present disclosure is not limited to the embodiments provided. There are many alternative ways of implementing the invention, as one skilled in the art will appreciate in light of the foregoing disclosure. The disclosed embodiments are thus illustrative, not restrictive. The present invention is intended to embrace all modifications and alternatives of the disclosed embodiments. Furthermore, the disclosed embodiments may be combined to form additional embodiments.

Indeed, implementations of the subject matter and the functional operations described in the present disclosure can be implemented in various systems, digital electronic circuitry, or in computer software, firmware, or hardware, including the structures disclosed in this specification and their structural equivalents, or in combinations of one or more of them. Embodiments of the subject matter described in this specification can be implemented as one or more computer program products, i.e., one or more modules of computer program instructions encoded on a tangible and non-transitory computer readable medium for execution by, or to control the operation of, data processing apparatus. The computer readable medium can be a machine-readable storage device, a machine-readable storage substrate, a memory device, a composition of matter affecting a machine-readable propagated signal, or a combination of one or more of them. The term "data processing unit" or "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

While present disclosure contains many specifics, these should not be construed as limitations on the scope of any invention or of what may be claimed, but rather as descriptions of features that may be specific to particular embodiments of particular inventions. Certain features that are described in the present disclosure in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations, one or more features from a combination can in some cases be excised from the combination, and the combination may be directed to a sub-combination or a variation of a sub-combination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in the present disclosure should not be understood as requiring such separation in all embodiments.

Only a few embodiments and examples are described and other embodiments, enhancements and variations can be made based on what is described and illustrated in the present disclosure. Furthermore, the embodiments may be combined to form additional embodiments.

## Claims

1. A hub device, comprising:
a first memory configured to:
store queue setting information for setting a plurality of software queues corresponding to a plurality of processors, and
store doorbell information generated based on the queue setting information and indicating statuses of the plurality of software queues;
a second memory configured to:
store tag information triggering operations of the plurality of processors; and
a hub controller configured to:
select a target processor from the plurality of processors upon a request of a host,
select a target queue from at least one software queue corresponding to the target processor, and
support communication between the host and the target processor using the target queue.

2. The hub device of claim 1, further comprising:
an input queue configured to receive a request from the host or the plurality of processors; and
an output queue configured to:
receive doorbell information corresponding to the target queue from the first memory, and
provide the doorbell information to the target processor.

3. The hub device of claim 2, wherein the request comprises at least one of a head pointer write request of the target queue, a tail pointer write request of the target queue, and a read request for the doorbell information.

4. The hub device of claim 2, wherein the target queue is set to a complete queue or a submission queue based on queue setting information corresponding to the target queue.

5. The hub device of claim 2, wherein, in response to receiving a tail pointer write request of the target queue from the host or the target processor through the input queue, the hub controller is configured to:
update a tail pointer of the target queue in the doorbell information, and
update the tag information to indicate that the target queue is not empty.

6. The hub device of claim 2, wherein, in response to receiving a head pointer write request of the target queue from the host or the target processor through the input queue, the hub controller is configured to:
update a head pointer of the target queue in the doorbell information, and
update the tag information to indicate that the target queue is empty.

7. The hub device of claim 1, wherein the hub controller is configured to write the queue setting information received from the host to the first memory in response to a setup request from the host.

8. The hub device of claim 1, wherein the second memory is configured to provide the target processor with an interrupt signal indicating whether the target queue is empty based on the tag information.

9. An operating method of a hub device including a first memory and a second memory, the operating method comprising:
updating doorbell information indicating statuses of a plurality of software queues corresponding to a plurality of processors stored in the first memory in response to a request from a host or the plurality of processors;
updating tag information triggering operations of the plurality of processors stored in the second memory based on the doorbell information;
selecting a target processor among the plurality of processors based on the tag information;
selecting a target queue from at least one software queue corresponding to the target processor; and
providing the target processor with doorbell information corresponding to the target queue.

10. The operating method of claim 9, further comprising providing the target processor with an interrupt signal indicating whether the target queue is empty based on the tag information.

11. The operating method of claim 9, further comprising:
writing queue setting information for setting up the plurality of software queues to the first memory in response to a setup request from the host; and
generating the doorbell information based on the queue setting information.

12. The operating method of claim 9, wherein the updating the doorbell information comprises updating a tail pointer of the target queue in the doorbell information in response to a tail pointer write request of the target queue received from the host or the target processor, and
wherein the updating the tag information comprises updating the tag information to indicate that the target queue is not empty.

13. The operating method of claim 9, wherein the updating the doorbell information comprises updating a head pointer of the target queue in the doorbell information in response to a head pointer write request for the target queue received from the host or the target processor, and
wherein the updating the tag information comprises updating the tag information to indicate that the target queue is empty.

14. A cluster system comprising:
a plurality of processors configured to communicate with a host; and
a hub device configured to:
store doorbell information indicating statuses of a plurality of software queues corresponding to the plurality of processors,
store tag information triggering operations of the plurality of processors,
select a target processor from the plurality of processors in response to a request from the host,
select a target queue from at least one software queue corresponding to the target processor, and
perform communication between the host and the target processor using the target queue.

15. The cluster system of claim 14, wherein the hub device is configured to update the tag information based on the doorbell information and provide the target processor with an interrupt signal indicating whether the target queue is empty based on the tag information.
